# EUROPEAN PATENT APPLICATION

(11) **EP 4 730 826 A1**
(43) Date of publication of application: **22.04.2026**
(21) Application number: 23951803.8
(22) Date of filing: 13.09.2023
(51) Int. Cl.: H04N 23/55

(54) **DROP PROTECTION METHOD, ELECTRONIC DEVICE, PROGRAM PRODUCT, AND READABLE MEDIUM**

(71) Applicant: Honor Device Co., Ltd., Shenzhen, Guangdong 518040 (CN)
(72) Inventor: HUANG, Libo, Shenzhen, Guangdong 518040 (CN); FENG, Shuai, Shenzhen, Guangdong 518040 (CN); YANG, Yang, Shenzhen, Guangdong 518040 (CN); ZHANG, Yifan, Shenzhen, Guangdong 518040 (CN); LI, Xiaoqin, Shenzhen, Guangdong 518040 (CN)
(74) Representative: Goddar, Heinz J.
(86) International application number: PCT/CN2023/118639
(87) International publication number: WO 2025/054862

(57) **Abstract**

This application provides a fall protection method, an electronic device, a program product, and a computer-readable storage medium. The electronic device includes a camera module, and the camera module includes a rotatable reflecting prism. The fall protection method includes: receiving a first operation of a user, and in response to the first operation of the user, controlling the camera module to capture an image or perform focus tracking-based recording, where the reflecting prism is in a rotating state in a process in which the camera module captures the image or performs focus tracking-based recording; detecting a running status of the electronic device when the reflecting prism is in the rotating state; and when detecting that the electronic device is in a falling state, controlling the reflecting prism to stop rotating. In the fall protection method, the reflecting prism is in the rotating state in the process in which the camera module captures the image or performs focus tracking-based recording. When the reflecting prism is in the rotating state, if it is detected that the electronic device is in the falling state, the reflecting prism is controlled to stop rotating, to avoid that the reflecting prism shakes and is damaged due to an impact.

## Description

### TECHNICAL FIELD

This application relates to the field of electronic device technologies, and in particular, to a fall protection method, an electronic device, a program product, and a computer-readable storage medium.

### BACKGROUND

A camera module of an electronic device can capture an image or perform focus tracking-based recording.

In a process in which the camera module of the electronic device captures an image or performs focus tracking-based recording, if the electronic device falls by accident, a reflecting prism in the camera module may shake and be damaged due to an impact.

### SUMMARY

This application provides a fall protection method, an electronic device, a computer program product, and a computer-readable storage medium, to avoid that a reflecting prism in a camera module shakes and is damaged due to an impact when an electronic device falls.

To achieve the foregoing objective, this application provides the following technical solutions.

According to a first aspect, this application provides a fall protection method, applied to an electronic device. The electronic device includes a camera module, and the camera module includes a rotatable reflecting prism. The fall protection method includes: receiving a first operation of a user, and in response to the first operation of the user, controlling the camera module to capture an image or perform focus tracking-based recording, where the reflecting prism is in a rotating state in a process in which the camera module captures the image or performs focus tracking-based recording; detecting a running status of the electronic device when the reflecting prism is in the rotating state; and when detecting that the electronic device is in a falling state, controlling the reflecting prism to stop rotating.

The user starts a camera application of the electronic device, and the electronic device displays a camera preview interface in a photographing mode. The camera preview interface displays a first object. The user performs the first operation on the first object, to control the camera module to capture a close-up picture of the first object. Alternatively, the user starts a camera application of the electronic device, and the electronic device displays a camera preview interface or a camera photographing interface in a video recording mode. The camera preview interface or the camera photographing interface may also display a first object. The user performs the first operation on the first object, to control the camera module to perform focus tracking-based recording on the first object.

In the fall protection method provided in the first aspect, the reflecting prism is in the rotating state in the process in which the camera module captures the image or performs focus tracking-based recording. When the reflecting prism is in the rotating state, if it is detected that the electronic device is in the falling state, the reflecting prism is controlled to stop rotating, to avoid that the reflecting prism shakes and is damaged due to an impact.

In a possible implementation, after the controlling the reflecting prism to stop rotating, the method further includes: locking a position of the reflecting prism. The reflecting prism can be fastened by locking the position of the reflecting prism, thereby further avoiding that the reflecting prism shakes and is damaged due to an impact.

In a possible implementation, the locking a position of the reflecting prism includes: locking the position of the reflecting prism by using a brake component, or locking the position of the reflecting prism by using a drive component of the reflecting prism.

In a possible implementation, the electronic device includes a first controller; that the reflecting prism is in a rotating state in a process in which the camera module captures the image or performs focus tracking-based recording includes: controlling, by the first controller, the reflecting prism to be in the rotating state in the process in which the camera module captures the image or performs focus tracking-based recording; and the detecting a running status of the electronic device when the reflecting prism is in the rotating state, and when detecting that the electronic device is in a falling state, controlling the reflecting prism to stop rotating includes: detecting, by the first controller, the running status of the electronic device when the reflecting prism is in the rotating state; and when detecting that the electronic device is in the falling state, controlling the reflecting prism to stop rotating.

In the foregoing possible implementation, the first controller may be understood as a scan IC. The first controller independently detects whether the electronic device is in the falling state, and when determining that the electronic device is in the falling state, controls the reflecting prism to stop rotating. There is further an advantage of not occupying an application processor resource of the electronic device.

In a possible implementation, the electronic device further includes an acceleration sensor and/or a gyroscope sensor, and the detecting, by the first controller, the running status of the electronic device when the reflecting prism is in the rotating state includes: detecting, by the first controller, the running status of the electronic device based on detection data of the acceleration sensor and/or the gyroscope sensor when the reflecting prism is in the rotating state.

In a possible implementation, the detecting, by the first controller, the running status of the electronic device when the reflecting prism is in the rotating state includes: detecting, by the first controller, the running status of the electronic device based on a message from an application processor of the electronic device when the reflecting prism is in the rotating state, where the message from the application processor is used to indicate whether the electronic device is in the falling state.

In a possible implementation, when detecting that the electronic device is in the falling state, the method further includes: obtaining abnormal state code information of a drive module of the reflecting prism; determining, based on the abnormal state code information of the drive module of the reflecting prism, that the electronic device is in the falling state; and stopping obtaining a target position of the reflecting prism.

In the foregoing possible implementation, when it is detected that the electronic device is in the falling state, the abnormal state code information of the drive module of the reflecting prism is obtained; and it is determined, based on the abnormal state code information of the drive module of the reflecting prism, that the electronic device is in the falling state, so that whether the electronic device is in the falling state can be further accurately determined based on the abnormal state code information of the drive module of the reflecting prism. In addition, after it is determined, based on the abnormal state code information, that the electronic device is in the falling state, the target position of the reflecting prism is stopped to be obtained, to avoid that the target position of the reflecting prism continues to be obtained when the reflecting prism does not rotate, and resources are wasted.

In a possible implementation, the obtaining abnormal state code information of a drive module of the reflecting prism includes: obtaining the abnormal state code information of the drive module of the reflecting prism by invoking an anomaly dump interface of the drive module of the reflecting prism.

In a possible implementation, after the controlling the reflecting prism to stop rotating, the method further includes: displaying a first interface, where the first interface includes a first control; receiving a second operation performed by the user on the first control; and in response to the second operation, determining the target position of the reflecting prism, and controlling the reflecting prism to rotate to the target position.

In the foregoing possible implementation, the user inputs the second operation for the first control, and it indicates that the electronic device is in a non-falling state. In response to the second operation, the electronic device determines the target position of the reflecting prism, and controls the reflecting prism to rotate to the target position, to resume rotation of the reflecting prism.

In a possible implementation, after the controlling the reflecting prism to stop rotating, the method further includes: detecting, based on the detection data of the acceleration sensor and/or the gyroscope sensor, that the electronic device is in a non-falling state; determining the target position of the reflecting prism; and controlling the reflecting prism to rotate to the target position. In this way, in a case in which the electronic device is in the non-falling state, rotation of the reflecting prism can be resumed through automatic detection without a user operation.

In a possible implementation, before the controlling the reflecting prism to rotate to the target position, the method further includes: unlocking the position of the reflecting prism.

In a possible implementation, before the determining the target position of the reflecting prism, the method further includes: resuming obtaining the target position of the reflecting prism.

According to a second aspect, this application provides an electronic device, including one or more processors, a memory, and a display. The memory and the display are coupled to the one or more processors, the memory is configured to store computer program code, the computer program code includes computer instructions, and when the one or more processors execute the computer instructions, the electronic device performs the fall protection method according to any one of the implementations of the first aspect.

According to a third aspect, this application provides a computer-readable storage medium, configured to store a computer program. When executed, the computer program is specifically used to implement the fall protection method according to any one of the implementations of the first aspect.

According to a fourth aspect, this application provides a computer program product. When the computer program product runs on a computer, the computer is enabled to perform the fall protection method according to any one of the implementations of the first aspect.

### BRIEF DESCRIPTION OF DRAWINGS

FIG. 1 is a diagram of a hardware structure of an electronic device according to an embodiment of this application;
FIG. 2 is a diagram of a software framework of an electronic device according to an embodiment of this application;
FIG. 3 is a diagram of a running time sequence of a fall detection method according to an embodiment of this application;
FIG. 4 is a flowchart in which a scan driver, an OIS driver, and an AF driver register two interfaces with an anomaly detection module according to an embodiment of this application;
FIG. 5 is a diagram of signaling interaction of a fall detection method according to an embodiment of this application;
FIG. 6 is another diagram of a running time sequence of a fall detection method according to an embodiment of this application; and
FIG. 7 is another diagram of signaling interaction of a fall detection method according to an embodiment of this application.

### DESCRIPTION OF EMBODIMENTS

The following clearly and completely describes the technical solutions in embodiments of this application with reference to the accompanying drawings in embodiments of this application. The terms used in the following embodiments are merely used for describing specific embodiments, and are not intended to limit this application. The singular forms "one", "a", "the", "the foregoing", "this", and "the one" used in this specification and the appended claims of this application are also intended to include forms such as "one or more", unless otherwise clearly specified in the context. It should be further understood that in the embodiments of this application, "one or more" means one, two, or more than two; and the term "and/or" describes an association relationship between associated objects and represents that three relationships may exist. For example, A and/or B may represent that only A exists, both A and B exist, and only B exists, where A and B may be singular or plural. The character "/" generally indicates an "or" relationship between associated objects.

Reference to "an embodiment", "some embodiments", or the like described in this specification means that specific features, structures, or characteristics described with reference to the embodiment are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

"A plurality of" in embodiments of this application means two or more. It should be noted that in the description of embodiments of this application, words such as "first" and "second" are merely used for distinguishing, and cannot be understood as an indication or implication of relative importance or an indication or implication of a sequence.

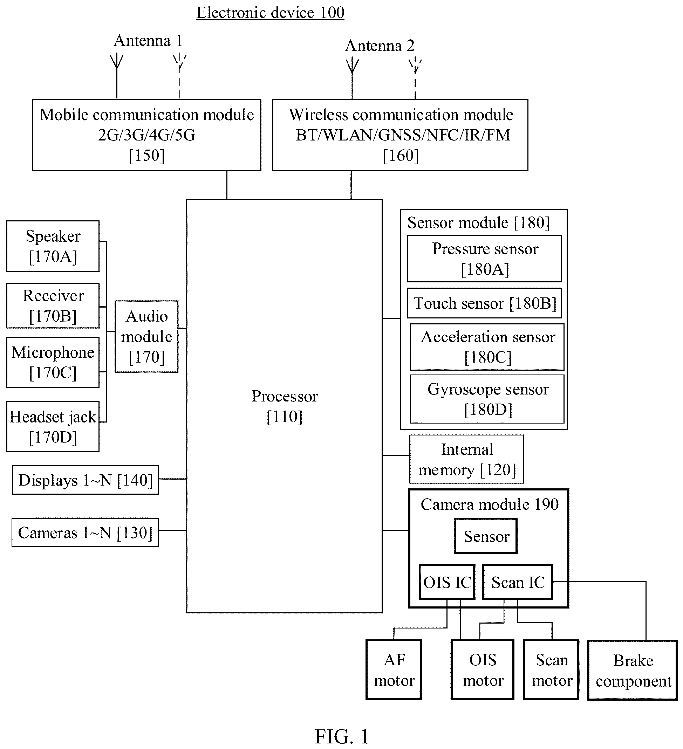

FIG. 1 shows an example of composition of an electronic device according to an embodiment of this application.

The electronic device may be a mobile phone, a tablet computer, a personal digital assistant (Personal Digital Assistant, PDA), a desktop computer, a laptop computer, a notebook computer, an ultra-mobile personal computer (Ultra-mobile Personal Computer, UMPC), a handheld computer, a netbook, a wearable device, and the like.

As shown in FIG. 1, the electronic device 100 may include a processor 110, an internal memory 120, a camera 130, a display 140, a mobile communication module 150, a wireless communication module 160, an audio module 170, a sensor module 180, a camera module 190, and the like.

It may be understood that the structure shown in this embodiment does not constitute a specific limitation on the electronic device 100. In some other embodiments, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a smart sensor hub (sensor hub), a neural-network processing unit (neural-network processing unit, NPU), and/or the like. Different processing units may be independent components, or may be integrated into one or more processors.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

The internal memory 120 may be configured to store computer executable program code, where the executable program code includes instructions. The processor 110 performs various function applications and data processing of the electronic device 100 by running the instructions stored in the internal memory 120. The internal memory 120 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 120 may include a high-speed random access memory, and may further include a non-volatile memory, such as at least one magnetic disk storage component, a flash memory component, and a universal flash storage (universal flash storage, UFS). The processor 110 performs various function applications and data processing of the electronic device 100 by running the instructions stored in the internal memory 120 and/or instructions stored in the memory disposed in the processor.

In some embodiments, the internal memory 120 stores instructions for performing the fall protection method.

The electronic device may implement some image shooting functions by using the ISP, the camera 130, the video codec, the GPU, the display 140, the application processor, and the like. The image shooting function may be understood as a conventional image shooting function.

The ISP is configured to process data fed back by the camera 130. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario.

The camera 130 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device may include one or N cameras 130, where N is a positive integer greater than 1.

The digital signal processor is configured to process a digital signal. In addition to processing a digital image signal, the digital signal processor may further process another digital signal. For example, when the electronic device selects a frequency, the digital signal processor is configured to perform Fourier transform or the like on frequency energy.

The video codec is configured to compress or decompress a digital video. The electronic device can support one or more video codecs. In this way, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device, for example, image recognition, facial recognition, voice recognition, and text understanding.

The electronic device implements a display function by using the GPU, the display 140, the application processor, and the like. The GPU is a microprocessor for image processing, and is connected to the display 140 and the application processor. The GPU is configured to perform mathematical and geometric calculation for image rendering. The processor 110 may include one or more GPUs that execute program instructions to generate or change display information.

The display 140 is configured to display an image, a video interface, and the like. The display 140 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device may include one or N displays 140, where N is a positive integer greater than 1.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 110 may further amplify a signal modulated by the modem processor, and convert the signal into an electromagnetic wave for radiation through the antenna 1.

The wireless communication module 160 may provide a solution for wireless communication that is applied to the electronic device 100 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 150 may further receive a to-be-sent signal from the processor 110, perform frequency modulation and amplification on the to-be-sent signal, and convert the to-be-sent signal into an electromagnetic wave for radiation through the antenna 2.

The electronic device may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device. In some other embodiments, two microphones 170C may be disposed on the electronic device. In addition to sound signal collection, a noise reduction function may be further implemented. In some other embodiments, three, four, or more microphones 170C may be alternatively disposed on the electronic device, to collect a sound signal, implement noise reduction, recognize a sound source, implement a directional recording function, and the like.

The headset jack 170D is configured to connect to a wired headset. The headset jack 170D may be the USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

In the sensor module 180, a pressure sensor 180A is configured to sense a pressure signal, and can convert the pressure signal into an electrical signal. In some embodiments, the pressure sensor 180A may be disposed on the display 140. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines strength of the pressure based on the change of the capacitance. When a touch operation is performed on the display 140, the electronic device detects strength of the touch operation through the pressure sensor 180A. The electronic device may also calculate a position of the touch based on a detection signal of the pressure sensor 180A.

A touch sensor 180B is also referred to as a "touch device". The touch sensor 180B may be disposed in the display 140. The touch sensor 180B and the display 140 form a touchscreen, also referred to as a "touch control screen". The touch sensor 180B is configured to detect a touch operation performed on or near the touch sensor. The touch sensor may transfer the detected touch operation to the application processor to determine a type of a touch event. Visual output related to the touch operation may be provided by using the display 140. In some other embodiments, the touch sensor 180B may alternatively be disposed on a surface of the electronic device at a position different from that of the display 140.

An acceleration sensor 180C may detect magnitudes of acceleration of the electronic device in various directions (usually on three axes). When the electronic device is still, the acceleration sensor may detect a magnitude and a direction of gravity, and may be further configured to recognize a posture of the electronic device.

A gyroscope sensor 180D may be configured to determine a motion posture of the electronic device. In some embodiments, angular velocities of the electronic device around three axes (namely, x, y, and z axes) may be determined by using the gyroscope sensor 180D.

In some embodiments, the electronic device implements some other image shooting functions by using the ISP, the camera module 190, the video codec, the GPU, the display 140, the application processor, and the like. The some other image shooting functions may refer to the following: In a photographing mode of a camera, for an operation that is input by a user for a photographed object, the object is automatically zoomed in or out by using the object as a center. Alternatively, a moving object may be continuously tracked in a video recording mode of a camera, to implement a focus tracking operation that is input by a user for a photographed object, so that the moving object selected by the user can be automatically tracked and photographed.

In some embodiments, the camera module 190 includes a lens photosensitive element sensor, an OIS IC, and a scan IC. The camera module 190 may further include an AF IC, which is not shown in the figure. In some embodiments, the camera module 190 is a long-focus module.

In the processor 110, the ISP is also configured to process data fed back by the camera module 190. For example, during photographing, a shutter is pressed, light is transmitted to the sensor through a lens, an optical signal is converted into an electrical signal, and the sensor transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario.

The lens of the camera module 190 includes a reflecting prism, and the reflecting prism is located in an incident optical path of the sensor, and is configured to reflect light to the sensor. In some embodiments, the reflecting prism supports rotation motion of an xz plane. For example, a range of the rotation motion is +/-24 degrees. The reflecting prism also supports rotation motion of a yz plane. For example, a range of the rotation motion is +/-7 degrees. Rotation of the reflecting prism may also be understood as rotation of the lens of the camera module. Rotation of the lens of the camera module can implement that the photographed object is at a picture center in a zoom-in or zoom-out process.

The scan IC may be understood as a controller for controlling rotation of the reflecting prism. For example, the scan IC may be a chip that has a logic control capability. A scan motor receives a control instruction of the scan IC, and may drive the reflecting prism to rotate. In some embodiments, there are two scan motors. One scan motor drives rotation of the reflecting prism on the xz plane, and the other scan motor drives rotation of the reflecting prism on the yz plane. The xz plane and the yz plane are two intersecting planes.

In some embodiments, a brake component may be configured to lock and unlock a position of the lens of the camera module. Before the reflecting prism rotates, the brake component may perform unlocking, and when rotation of the reflecting prism ends, the brake component performs locking, so that the lens of the camera module can be quickly stabilized after reaching a position. In some embodiments, the brake component includes a brake IC and an actuator. The brake IC may receive a control instruction of the scan IC to control the actuator to perform locking or unlocking. The brake IC may be understood as a controller, such as a chip that has a logic control capability.

In some embodiments, an OIS IC (Optical Image Stabilizer IC, optical image stabilizer IC) is used for image stabilization. The OIS IC may control an OIS motor to perform image stabilization. In some embodiments, in a process in which the scan motor drives rotation of the reflecting prism, the OIS motor does not perform image stabilization. Based on this, the scan IC may control the OIS motor not to run during running of the scan motor, and to run after running of the scan motor ends. The OIS IC and the OIS motor may be collectively referred to as an image stabilization component.

In some embodiments, an AF motor is used for focusing, and the OIS IC may perform algorithm operation compensation and then control the AF motor to perform focusing. The AF IC and the AF motor may be referred to as a focusing component.

In some embodiments, the scan IC and the OIS IC are configured with anomaly interrupt pins. The anomaly interrupt pins of the OIS IC and the scan IC are connected to an AP. The anomaly interrupt pins of the OIS IC and the scan IC may be connected to the AP after being connected in parallel, or may be separately connected to the AP.

In some embodiments, the scan IC and the OIS IC communicate with the AP in the processor 110 by using the I2C bus. The AP may read abnormal state code of the scan IC and the OIS IC by using the I2C bus, or may read interrupt signals of the scan IC and the OIS IC by using the I2C bus.

In some embodiments, the brake IC is connected to the scan IC through the I2C bus, and the AP may read abnormal state code of the brake IC through the scan IC.

In some embodiments, the AF IC is connected to the OIS IC through the I2C bus, and the AP may read abnormal state code of the AF IC through the OIS IC.

In a process in which the camera module 190 shown in FIG. 1 captures an image or performs focus tracking-based recording, the reflecting prism in the lens of the camera module 190 may rotate. In a rotation process of the reflecting prism, if the electronic device falls by accident, the reflecting prism may shake and be damaged due to an impact.

Based on this, this application provides a fall protection solution, to lock the reflecting prism when it is detected that the electronic device is in a falling state, so as to avoid damage to the reflecting prism.

With reference to some hardware components of the electronic device shown in FIG. 1, the following describes content that the electronic device controls the reflecting prism for locking when the electronic device is in a falling state.

In some embodiments, the acceleration sensor 180C and the gyroscope sensor 180D may be connected to the scan IC by using a bus, for example, a serial peripheral interface (Serial Peripheral Interface, SPI) bus. The acceleration sensor 180C may send detection data to the scan IC by using the bus, and the gyroscope sensor 180D may also send detection data to the scan IC by using the bus.

In some embodiments, the scan IC may determine, by using the detection data of the acceleration sensor 180C and/or the gyroscope sensor 180D, whether the electronic device is in the falling state. When determining that the electronic device is in the falling state, the scan IC may control the reflecting prism to stop rotating, and may further lock the reflecting prism by using the brake component, so as to protect the reflecting prism. In addition, the scan IC independently detects whether the electronic device is in the falling state, and when determining that the electronic device is in the falling state, controls the reflecting prism to stop rotating, and locks the reflecting prism by using the brake component. There is further an advantage of not occupying an application processor AP resource of the electronic device.

In some other embodiments, the scan IC supports fall detection, but does not support generating an instruction to control the reflecting prism to stop rotating, and does not support generating an instruction to lock the reflecting prism by using the brake component. The scan IC determines, by using the detection data of the acceleration sensor 180C and the gyroscope sensor 180D, that the electronic device is in the falling state, and then reports an interrupt signal to the AP in the processor 110. The AP may generate a control instruction and send the control instruction to the scan IC. In response to the control instruction, the scan IC controls the reflecting prism to stop rotating, and locks the reflecting prism by using the brake component.

In an implementation, the scan IC is configured with an anomaly interrupt pin, and the scan IC may report the interrupt signal to the AP by using the anomaly interrupt pin.

For a manner in which the scan IC determines, by using the detection data of the acceleration sensor 180C and/or the gyroscope sensor 180D, whether the electronic device is in the falling state, refer to the conventional technology. This is not specifically limited in embodiments of this application.

In some other embodiments, the camera module 190 of the electronic device is not configured with the brake component. The scan IC determines, by using the detection data of the acceleration sensor 180C and the gyroscope sensor 180D, that the electronic device is in the falling state. In this case, after the reflecting prism is controlled to stop rotating, the reflecting prism may be further fastened in a position in a manner of powering on and controlling a drive motor of the reflecting prism. Alternatively, after the reflecting prism is controlled to stop rotating, the reflecting prism is driven to return to a central position by using a drive motor of the reflecting prism, and after the reflecting prism returns to the central position, the reflecting prism may be fastened in the central position in a manner of powering on and controlling the drive motor of the reflecting prism, so as to prevent fall damage.

In some other embodiments, the scan IC may alternatively control, based on the falling state detected by the electronic device, the reflecting prism to stop rotating, and lock the reflecting prism by using the brake component, or control the reflecting prism to stop rotating, and fasten the reflecting prism in a position in a manner of powering on and controlling the drive motor of the reflecting prism, or control the reflecting prism to stop rotating, pull the reflecting prism back to a central position, and fasten the reflecting prism in the central position in a manner of powering on and controlling the drive motor of the reflecting prism.

A manner in which the scan IC uses the detected falling state of the electronic device is as follows:

A sensor hub in the processor 110 may determine, based on the detection data of the acceleration sensor 180C and/or the gyroscope sensor 180D, whether the electronic device is in the falling state. When determining that the electronic device is in the falling state, the sensor hub sends a message to the AP to notify the AP that the electronic device is in the falling state. The AP may send a message to the scan IC to notify that the electronic device is in the falling state. The scan IC may perform the foregoing control operation based on the message. Alternatively, the AP generates a control instruction to control the scan IC to perform the foregoing control operation.

It should be noted that the OIS IC may also detect whether the electronic device is in the falling state, and control, based on that the electronic device is in the falling state, a component that performs an image stabilization function to stop running, so as to avoid damage caused by the component that performs the image stabilization function because the electronic device falls.

In some embodiments, the acceleration sensor 180C and the gyroscope sensor 180D may be connected to the OIS IC by using a bus, for example, a serial peripheral interface (Serial Peripheral Interface, SPI) bus. The acceleration sensor 180C may send detection data to the OIS IC by using the bus, and the gyroscope sensor 180D may also send detection data to the OIS IC by using the bus.

In some embodiments, the OIS IC may determine, by using the detection data of the acceleration sensor 180C and the gyroscope sensor 180D, whether the electronic device is in the falling state. When determining that the electronic device is in the falling state, the OIS IC may pause image stabilization, and may lock an image stabilization prism by using the brake component or use another manner to protect the image stabilization prism.

In some other embodiments, the OIS IC supports fall detection, but does not support generating an instruction to lock the image stabilization prism by using the brake component. The OIS IC determines, by using the detection data of the acceleration sensor 180C and the gyroscope sensor 180D, that the electronic device is in the falling state, and then reports an interrupt signal to the AP in the processor 110. The AP may generate a control instruction and send the control instruction to the OIS IC. In response to the control instruction, the OIS IC locks the image stabilization prism by using the brake component.

In an implementation, the OIS IC is configured with an anomaly interrupt pin, and the OIS IC may report the interrupt signal to the AP by using the anomaly interrupt pin.

For a manner in which the OIS IC determines, by using the detection data of the acceleration sensor 180C and the gyroscope sensor 180D, whether the electronic device is in the falling state, refer to the conventional technology.

In some other embodiments, the camera module 190 of the electronic device is not configured with the brake component. The OIS IC determines, by using the detection data of the acceleration sensor 180C and the gyroscope sensor 180D, that the electronic device is in the falling state. In this case, the image stabilization prism may be fastened in a position in a manner of powering on and controlling a drive motor of the image stabilization prism, to prevent fall damage.

In some other embodiments, the OIS IC may alternatively lock the image stabilization prism by using the brake component based on the detected falling state of the electronic device, or fasten the image stabilization prism in a position in a manner of powering on and controlling a drive motor of the image stabilization prism.

A manner in which the OIS IC uses the detected falling state of the electronic device is as follows:

A sensor hub in the processor 110 may determine, based on the detection data of the acceleration sensor 180C and the gyroscope sensor 180D, whether the electronic device is in the falling state. When determining that the electronic device is in the falling state, the sensor hub sends a message to the AP to notify the AP that the electronic device is in the falling state. The AP may send a message to the OIS IC to notify that the electronic device is in the falling state. The OIS IC may perform the foregoing control operation based on the message. Alternatively, the AP generates a control instruction to control the OIS IC to perform the foregoing control operation.

The electronic device further runs an operating system above the hardware components shown in FIG. 1, for example, an iOS^{®} operating system, an Android^{®} operating system, or a Windows^{®} operating system. An application such as a camera application may be installed and run on the operating system.

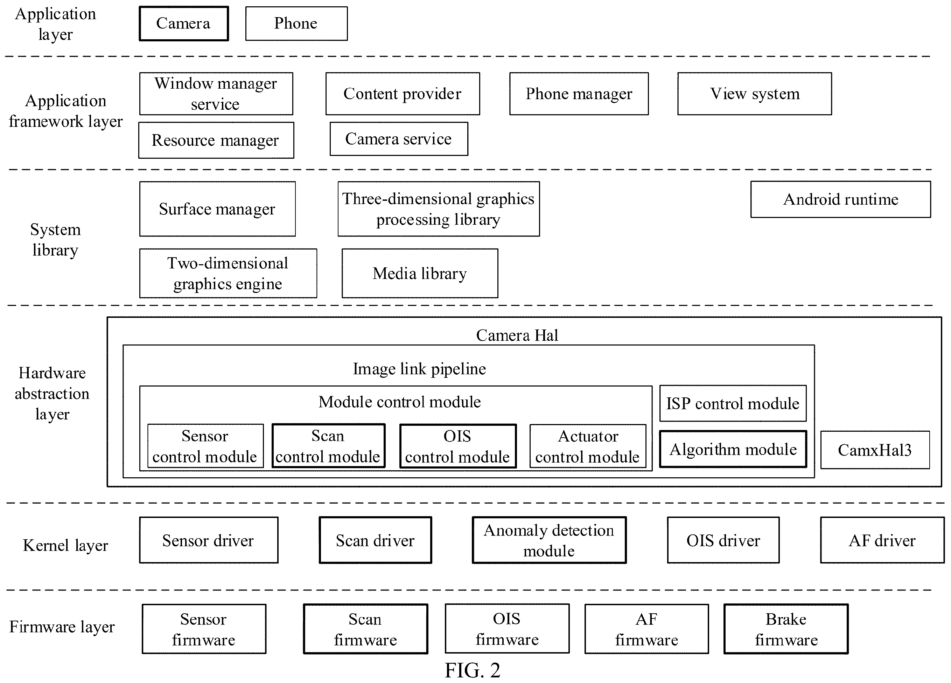

FIG. 2 is a schematic diagram of a software structure of an electronic device according to an embodiment of this application.

A layered architecture divides an operating system of the electronic device into several layers, and each layer has a clear role and task. The layers communicate with each other through software interfaces. In some embodiments, the operating system of the electronic device is an Android system. The Android system may be divided into five layers from top to bottom: an application (application, APP) layer, an application framework layer (FWK for short), a system library, a hardware abstraction layer (Hardware Abstraction Layer, HAL), and a kernel layer.

The application layer may include a series of application packages. As shown in FIG. 2, the application packages may include applications such as Camera and Phone.

The application framework layer provides an application programming interface (application programming interface, API) and a programming framework for applications at the application layer. The application framework layer includes some predefined functions.

As shown in FIG. 2, the application framework layer may include a window manager service, a content provider, a phone manager, a view system, a resource manager, a camera service, and the like.

The window management service is configured to manage a window program. The window management service may control addition, deletion, display, and hiding of a window. The content provider is configured to store and obtain data, and enable the data to be accessible to an application. The data may include a video, an image, audio, calls that are made and answered, a browsing history and bookmarks, a phone book, and the like. The phone manager is configured to provide a communication function of the electronic device, for example, call status management (including answering, hanging up, and the like). The view system includes visual controls such as a text display control and a picture display control. The view system may be configured to construct an application. The resource manager provides various resources for the application, such as a localized string, an icon, a picture, a layout file, and a video file.

In some embodiments, the camera service may also be referred to as a camera framework, and is configured to receive a request such as a recording request or an image capturing request from the camera application, maintain service logic of internal transfer of the request such as the recording request or the image capturing request, and send a final result of the request to the camera application.

The Android runtime includes a core library and a virtual machine. The Android runtime is responsible for scheduling and management of the Android system. In some embodiments of this application, the cold start of an application runs in the Android runtime, and the Android runtime obtains an optimized file status parameter of the application. Then, the Android runtime can determine, based on the optimized file status parameter, whether an optimized file is out of date due to system upgrade, and return a determining result to an application control module.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of 2D and 3D layers for a plurality of applications. The media library supports playback and recording in a plurality of commonly used audio and video formats, and static image files. The media library can support a plurality of audio and video coding formats, such as MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for 2D drawing.

The hardware abstraction layer is software located between an operating system kernel and a hardware circuit, and is usually configured to abstract hardware, so as to implement interaction between the operating system and the hardware circuit at a logic layer.

In some embodiments, the hardware abstraction layer includes a camera Hal. The camera Hal includes an image link pipeline and CamxHal3. The camera Hal is mainly responsible for construction, linking, interactive control, and the like of all modules in an image link. The CamxHal3 is configured to interact with an upper-layer module to turn on or off the camera Hal, and is configured to transmit data to the camera Hal.

In some embodiments, the image link pipeline includes a module control module, an ISP control module, and an algorithm module. The module module is responsible for managing a camera module. The module module includes a sensor control module, a scan control module, an OIS control module, and an actuator control module.

In some embodiments, the sensor control module is configured to connect to an image sensor, and the sensor control module may control running of a sensor by using a sensor driver and sensor firmware. The sensor control module is also referred to as a SensorNode.

In some embodiments, the scan control module is configured to connect to a scan motor to implement rotation of a reflecting prism, and the scan control module may control running of the scan motor by using the scan driver and scan firmware.

In some embodiments, the OIS control module is configured to implement image stabilization in a rotation process of the camera module, and the OIS control module may control running of an OIS motor by using an OIS driver and OIS firmware. In some other embodiments, the scan control module may control running of the OIS motor by using the scan driver and the scan firmware and controlling the OIS firmware.

In some embodiments, the actuator control module is used for AF focusing in a rotation process of the camera module. The actuator control module may control running of an AF motor by using an AF driver, the OIS firmware, and AF firmware.

The ISP control module is configured to: receive image data sent by the sensor, process the image data, and send processed image data to the algorithm module. In some embodiments, the sensor refers to a sensor of the camera module 190.

The algorithm module is configured to: receive the image data sent by the ISP control module, analyze the image data, obtain a running policy of a lower-layer module, and feed back the running policy to a module in the module control module. In some embodiments, the algorithm module obtains a target position of the reflecting prism, and feeds back the target position to the scan control module.

The kernel layer is a layer between hardware and software. The kernel layer receives a command from a control layer, and supports conversion of the control command to an actual device operation instruction. The operation instruction includes power-on/off control, and device mode register instruction generation and delivery. A register control command of a driver layer is transferred to a firmware layer through a device bus. The kernel layer includes at least the sensor driver, the scan driver, the OIS driver, and the AF driver.

The firmware layer refers to a software system integrated into components of the camera module, including the sensor firmware, the scan firmware, the OIS firmware, the AF firmware, and brake firmware. In some embodiments, the firmware layer may not include brake firmware.

In some embodiments, the sensor firmware is a software system running inside the sensor and is responsible for sensor exposure and image data output. The scan firmware is a software system running inside the scan IC, is configured to control rotation of a lens of the camera module, and is responsible for converting code delivered by an upper layer into a control signal, so as to drive rotation of the lens of the camera module, to find a view through focus tracking. The brake firmware is a software system running inside the brake IC, and is configured to lock a position of the camera module, so that the camera module is quickly stabilized after reaching the target position. The OIS firmware is a software system running inside the OIS IC, and is used for image stabilization. The AF firmware is a software system running inside the AF IC, is used for focus tracking, and is responsible for converting the target position delivered by an upper layer into a motor current, and driving the AF motor to perform focusing.

It should be further noted that, although the Android^{®} system is used as an example for description in this embodiment of this application, a basic principle thereof is also applicable to an electronic device based on an operating system such as iOS^{®} or Windows^{®}.

According to the foregoing content, in a process in which the camera module 190 captures an image or performs focus tracking-based recording, the electronic device determines that the electronic device is in the falling state, may control the reflecting prism of the lens of the camera module 190 to stop rotating, and may further lock the reflecting prism by using the brake component, so as to protect the reflecting prism.

After the reflecting prism stops rotating, the electronic device releases the falling state, that is, is not in the falling state. The electronic device needs to control the reflecting prism to resume rotation, to support the camera module 190 to capture an image or perform focus tracking-based recording.

The electronic device may control the reflecting prism to resume rotation in two manners: manual reset by the user and automatic reset by the scan IC of the electronic device. The following separately describes the two manners with reference to the modules of the electronic device shown in FIG. 2.

In the two manners of manual reset by the user and automatic reset by the scan IC of the electronic device that are described in the following content, an example in which the scan IC determines that the electronic device is in the falling state, and generates a control instruction to control the reflecting prism to stop rotating, and control the brake component to lock the reflecting prism is used for description.

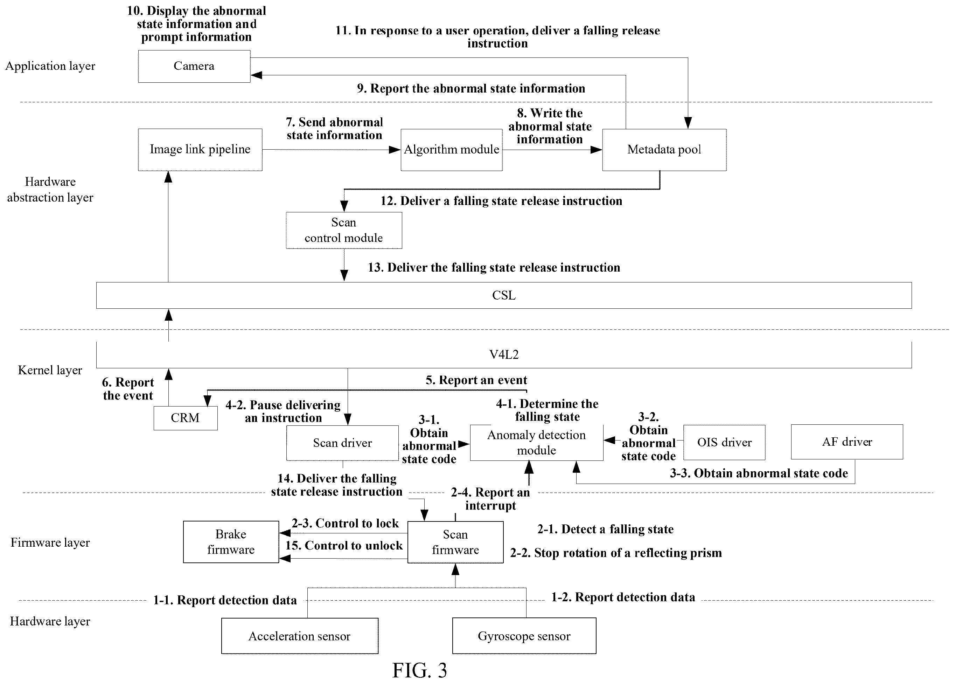

FIG. 3 shows an overall running time sequence of modules of an electronic device corresponding to a manual reset manner of a user.

As shown in FIG. 3, an acceleration sensor and a gyroscope sensor start running to obtain detection data. The acceleration sensor performs 1-1 to report detection data to firmware scan firmware of a scan IC, and the gyroscope sensor performs 1-2 to report detection data to the firmware scan firmware of the scan IC.

Based on the detection data of the acceleration sensor and the gyroscope sensor, the scan firmware performs 2-1 to detect that the electronic device is in a falling state, performs 2-2 to control a reflecting prism to stop rotating, performs 2-3 to lock the reflecting prism by using brake firmware, and performs 2-4 to report an interrupt signal to an anomaly detection module, to notify the anomaly detection module that the electronic device is abnormal.

After receiving the interrupt signal reported by the scan firmware, the anomaly detection module may call back, based on the interrupt signal, an anomaly dump interface of each drive module, to obtain abnormal state code of each drive module. For example, FIG. 3 shows that the anomaly detection model performs 3-1 to call back an anomaly dump interface registered by a scan driver to obtain scan abnormal state code; the anomaly detection model performs 3-2 to call back an anomaly dump interface registered by an OIS driver to obtain OIS abnormal state code; and the anomaly detection model performs 3-1 to call back an anomaly dump interface registered by an AF driver to obtain AF abnormal state code. In some embodiments, the anomaly detection module may alternatively call back, based on the interrupt signal, an anomaly dump interface of a scan driver, to obtain abnormal state code of the scan driver.

It should be noted that a plurality of drivers at a kernel layer, such as the scan driver, the OIS driver, and the AF driver, may register the following two interfaces with the anomaly detection module when a kernel driver is loaded:
an anomaly information parsing and dump interface, which is briefly referred to as an anomaly dump interface, and is configured to call back each module in an abnormal case to complete anomaly parsing, and provide a module diagnosis result; and
an anomaly reset interface, configured to support anomaly processing and actions inside the module.

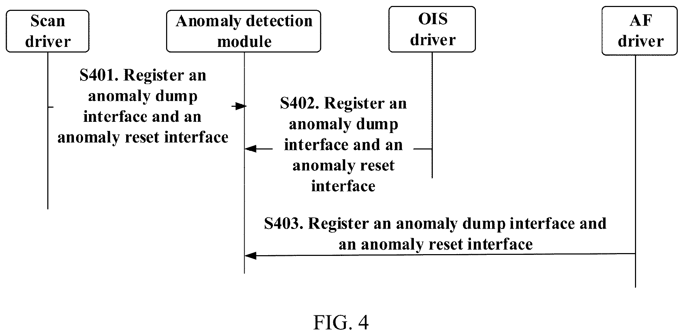

FIG. 4 is a flowchart in which a scan driver, an OIS driver, and an AF driver register two interfaces with an anomaly detection module. As shown in FIG. 4, during loading, the scan driver, the OIS driver, and the AF driver perform the following step S401 to step S403.

S401. The scan driver registers an anomaly dump interface and an anomaly reset interface with the anomaly detection module.

S402. The OIS driver registers an anomaly dump interface and an anomaly reset interface with the anomaly detection module.

S403. The AF driver registers an anomaly dump interface and an anomaly reset interface with the anomaly detection module.

It should be further noted that scan firmware is configured with an anomaly check procedure. The scan firmware performs the anomaly check procedure to check whether an anomaly occurs during running of the scan firmware. After performing anomaly check to obtain an abnormal phenomenon, the scan firmware may code the abnormal phenomenon. In addition, different abnormal phenomena may be coded differently.

In some embodiments, the scan firmware may code a falling state of an electronic device to obtain abnormal state code, and the code may uniquely indicate the fault that the electronic device is in the falling state. The abnormal state code generally refers to abnormal state code information, which is referred to as abnormal state code for short in the following content.

The scan driver reads the abnormal state code from the scan firmware. The scan firmware returns the abnormal state code to the anomaly detection module.

The anomaly detection module performs 4-1 based on abnormal state code of a driver module to determine that the electronic device is in the falling state, and performs 4-2 to notify the scan driver to pause delivery of all instructions, where the instruction generally refers to a control instruction delivered to the scan firmware and used to control a reflecting prism.

The anomaly detection module further performs 5 to report an event to a CRM to indicate an abnormal state that the electronic device is in the falling state. The CRM performs 6 to report the event to an image link pipeline through V4L2 and CSL.

The image link pipeline further performs 7 to send abnormal state information to an algorithm module, to notify the algorithm module that the electronic device is in the falling state. In some embodiments, after receiving the abnormal state information, the algorithm module may further stop calculation of a target position of the reflecting prism based on the abnormal state information.

The algorithm module performs 8 to write the abnormal state information into a metadata pool.

The metadata pool may perform 9 to report the abnormal state information to a camera application. After receiving the abnormal state information, the camera application may perform 10 to display the abnormal state information and prompt information, where the abnormal state information may be used to prompt the user that the electronic device is in the falling state, the prompt information may include a control operable by the user, and the control may be used to control an instruction for releasing the falling state.

The camera application receives an operation of the user, and performs 11 to deliver a falling release instruction to the metadata pool in response to the operation of the user. The metadata pool performs 12 to deliver the falling release instruction to a scan control module.

The scan control module performs 13 to deliver the falling release instruction to the scan driver by using the CSL and the V4L2 bus. After receiving the falling release instruction, the scan driver may perform 14 to deliver the falling release instruction to the scan firmware.

In response to the falling release instruction, the scan firmware performs 15 to control brake firmware to unlock the reflecting prism.

In some embodiments, after the scan driver receives the falling release instruction, the scan driver may resume delivering an instruction for controlling the reflecting prism to rotate to the scan firmware, and the scan firmware may control, based on the instruction, the reflecting prism to rotate after the reflecting prism is unlocked.

It should be noted that, in some embodiments, the target position, that is, code, of the reflecting prism obtained by the algorithm module may be written into the data pool metadata pool, so that another module monitors a change of data in the data pool. The scan control module performs data monitoring on the metadata pool. The scan control module detects that the code is written into the metadata pool, and after checking the code, delivers a control command to the scan driver. The control command carries the code. After receiving the control command, the scan driver may generate, based on the code, an instruction for controlling the reflecting prism to rotate.

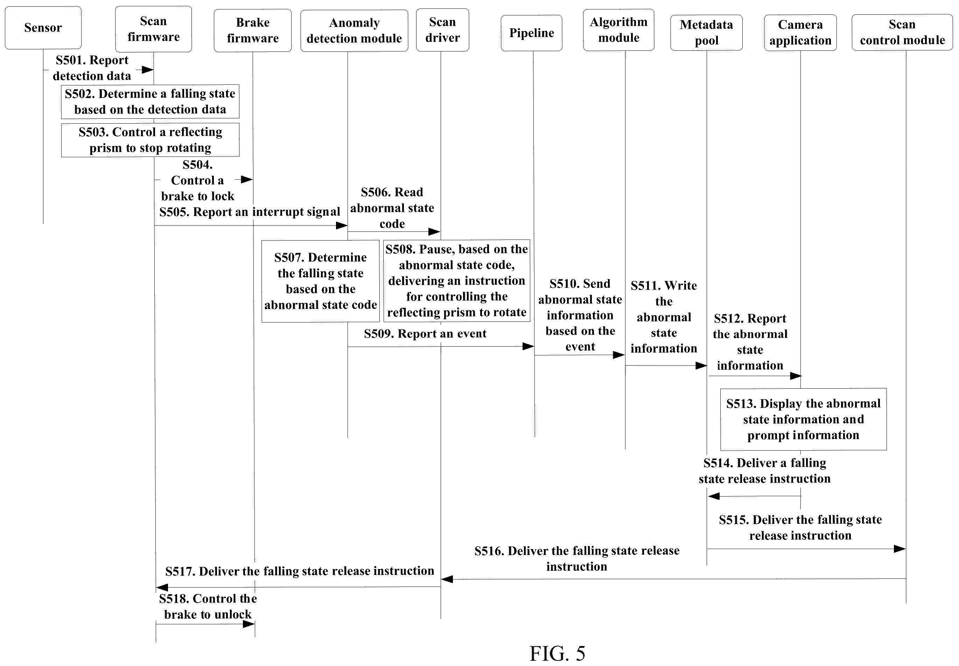

FIG. 5 is a diagram of signaling interaction of a fall detection solution according to an embodiment of this application.

As shown in FIG. 5, the fall detection method provided in this embodiment of this application includes the following steps.

S501. A sensor reports detection data to scan firmware.

The sensor may refer to the acceleration sensor 180C and/or the gyroscope sensor 180D of the electronic device.

In some embodiments, the sensor may be configured in a normally on mode. After the electronic device is powered on, the sensor starts running, and continuously performs detection, or periodically performs detection, to obtain the detection data.

In some other embodiments, the electronic device starts a camera application to capture an image or perform focus tracking-based recording, and the camera module 190 is started and run synchronously. The sensor may start running, and continuously perform detection, or periodically perform detection, to obtain the detection data.

In some embodiments, the sensor may be connected to a scan IC by using a bus. Based on this, the detection data of the sensor may be reported to the scan firmware by using the bus.

S502. The scan firmware determines, based on the detection data, that the electronic device is in a falling state.

When receiving the detection data of the sensor, the scan firmware may determine, based on the detection data, whether the electronic device is in the falling state. For a manner in which the scan firmware determines, based on the detection data, whether the electronic device is in the falling state, refer to the conventional technology. This is not limited in this embodiment of this application.

It may be understood that the falling state may mean that the electronic device falls from the air.

If the scan firmware determines, based on the detection data, that the electronic device is in the falling state, the following step S503 is performed. If the scan firmware determines, based on the detection data, that the electronic device is in the falling state, the current procedure may be exited. The scan firmware waits to receive new detection data, and then determines, based on the new detection data, whether the electronic device is in the falling state.

S503. The scan firmware controls a reflecting prism to stop rotating.

As described above, the camera module 190 runs to capture an image or perform focus tracking-based recording, and the reflecting prism is driven to rotate. The scan firmware determines that the electronic device is in the falling state. To avoid damage to the reflecting prism, the reflecting prism is controlled to stop rotating.

S504. The scan firmware controls, by using brake firmware, a brake to lock.

The brake firmware controls a brake component to perform brake locking.

In some embodiments, the camera module 190 of the electronic device is not configured with the brake component, and the scan firmware does not perform step S504. The scan firmware may fasten the reflecting prism in a position in a manner of powering on and controlling a drive motor of the reflecting prism. Alternatively, the reflecting prism is driven to return to a central position by using a drive motor of the reflecting prism, and after the reflecting prism returns to the central position, the reflecting prism may be fastened in the central position in a manner of powering on and controlling the drive motor of the reflecting prism, so as to prevent fall damage.

S505. The scan firmware reports an interrupt signal to an anomaly detection module.

Step S505 may not be limited to the execution sequence shown in FIG. 5. If determining, based on the detection data, that the electronic device is in the falling state, the scan firmware may report the interrupt signal to the anomaly detection module.

S506. The anomaly detection module reads abnormal state code from a scan driver.

After receiving the interrupt signal, the anomaly detection module may determine, based on the interrupt signal, that the electronic device is in an abnormal state.

In some embodiments, after performing module anomaly diagnosis procedure to perform anomaly check to obtain an abnormal phenomenon, the scan firmware may code the abnormal phenomenon. In addition, different abnormal phenomena may be coded differently. The scan firmware determines, based on the detection data of the sensor, that the electronic device is in the falling state, and the scan firmware codes the falling state to obtain abnormal state code of the falling state, which is briefly referred to as abnormal state code. The scan firmware returns the abnormal state code to the anomaly detection module, so that the anomaly detection module reads the abnormal state code from the scan driver.

In some other embodiments, a fall detection module generally cannot determine an abnormal component by using an interrupt signal, and therefore, a plurality of drive modules may be triggered to perform the module anomaly diagnosis procedure. In some embodiments, the anomaly detection module calls back an anomaly dump interface of each drive module to obtain abnormal state code of each drive module. A manner in which the plurality of drive modules perform the module anomaly diagnosis procedure is the same as a manner for the scan firmware that is proposed in the foregoing content. Details are not described herein again.

S507. The anomaly detection module determines, based on the abnormal state code, that the electronic device is in the falling state.

The abnormal state code may indicate an abnormal state type of the electronic device. Based on this, the anomaly detection module may determine, based on the abnormal state code, that the electronic device is in the falling state.

S508. The scan driver pauses, based on the abnormal state code, delivering an instruction for controlling the reflecting prism to rotate.

As described above, the scan driver receives a control instruction delivered by a scan control module, where the control instruction carries code, and the scan driver may generate, based on the code, the instruction for controlling the reflecting prism to rotate.

When the electronic device is in the falling state, the reflecting prism is not rotatable. Therefore, the scan driver obtains the abnormal state code, and may pause delivering the instruction for controlling the reflecting prism to rotate.

In some embodiments, the scan driver may cache the code carried in the control instruction delivered by the scan control module.

S509. The anomaly detection module reports an event to an image link pipeline.

In some embodiments, the anomaly detection module reports the event to a CRM (camera request manager), and the event indicates that the electronic device is in the falling state. The CRM receives the event, and reports the event to the image link pipeline through V4L2 and CSL buses.

The CRM (camera request manager) is a module configured to manage a request of a camera application. A requirement delivered by a module at a hardware abstraction layer may be first transmitted to the CRM. The CRM performs matching based on a sensor frame timing sequence, and then delivers a configuration to a corresponding module in an N+1 or N+2 effective mechanism. A data interrupt of the sensor frame may also be reported to the module at the hardware abstraction layer by using the CRM.

In some embodiments, the anomaly detection module may report the event to the image link pipeline, or the event may be reported to the image link pipeline by using another module.

S510. The image link pipeline sends abnormal state information to an algorithm module based on the event.

The image link pipeline sends the abnormal state information to the algorithm module based on the event, to notify the algorithm module that the electronic device is in the falling state, and the reflecting prism stops rotating.

S511. The algorithm module writes the abnormal state information into a metadata pool.

After receiving the abnormal state information, the algorithm module may write the abnormal state information into the metadata pool.

In some embodiments, after receiving the abnormal state information, the algorithm module may pause calculating a target position of the reflecting prism.

S512. The metadata pool reports the abnormal state information to the camera application.

Data written into the metadata pool may be reported to the camera application. Based on this, after the algorithm module writes the abnormal state information into the metadata pool, the metadata pool reports the abnormal state information to the camera application.

S513. The camera application displays the abnormal state information and prompt information.

After receiving the abnormal state information, the camera application may determine that the electronic device is in the falling state, and the reflecting prism of the camera module 190 has stopped rotating. Based on this, the camera application may display the abnormal state information and the prompt information.

The abnormal state information may indicate that the electronic device is in the falling state, and the reflecting prism of the camera module 190 has stopped rotating. The prompt information may be used to prompt a user whether to release the falling state. The prompt information may include a control operable by the user, and the control may be used to generate an instruction for releasing the falling state.

In some embodiments, the camera application may display the abnormal state information and the prompt information in a pop-up window manner.

S514. The camera application receives a user operation, and in response to the user operation, delivers a falling state release instruction to the metadata pool.

The user inputs the operation to release the falling state. The camera application receives the operation of the user, and in response to the user operation, delivers the falling state release instruction to the metadata pool.

It should be noted that, that the user inputs the operation to release the falling state means that the electronic device is held by the user and is not in the falling state. Therefore, the camera application receives the user operation, and in response to the user operation, delivers the falling state release instruction to the metadata pool.

S515. The metadata pool delivers the falling state release instruction to the scan control module.

The falling state release instruction is written into the metadata pool, and the scan control module may detect that the falling state release instruction is written into the metadata pool.

S516. The scan control module delivers the falling state release instruction to the scan driver.

The scan control module detects that the falling state release instruction is written into the metadata pool, and may deliver the falling state release instruction to the scan driver.

S517. The scan driver delivers the falling state release instruction to the scan firmware.

The scan driver receives the falling state release instruction, and may deliver the falling state release instruction to the scan firmware.

In some embodiments, after the scan driver receives the falling release instruction, the scan driver may resume delivering an instruction for controlling the reflecting prism to rotate to the scan firmware, and the scan firmware may control, based on the instruction, the reflecting prism to rotate after the reflecting prism is unlocked.

S518. The scan firmware controls, by using the brake firmware, the brake to unlock.

After receiving the falling release instruction, the scan driver may deliver the falling release instruction to the scan firmware. In response to the falling release instruction, the scan firmware controls the brake firmware to unlock the reflecting prism.

In some embodiments, after the camera application delivers the falling state release instruction to the metadata pool, the algorithm module may also monitor the falling state release instruction to resume calculating the target position of the reflecting prism. In some embodiments, the falling state release instruction is in a metadata (metadata) format.

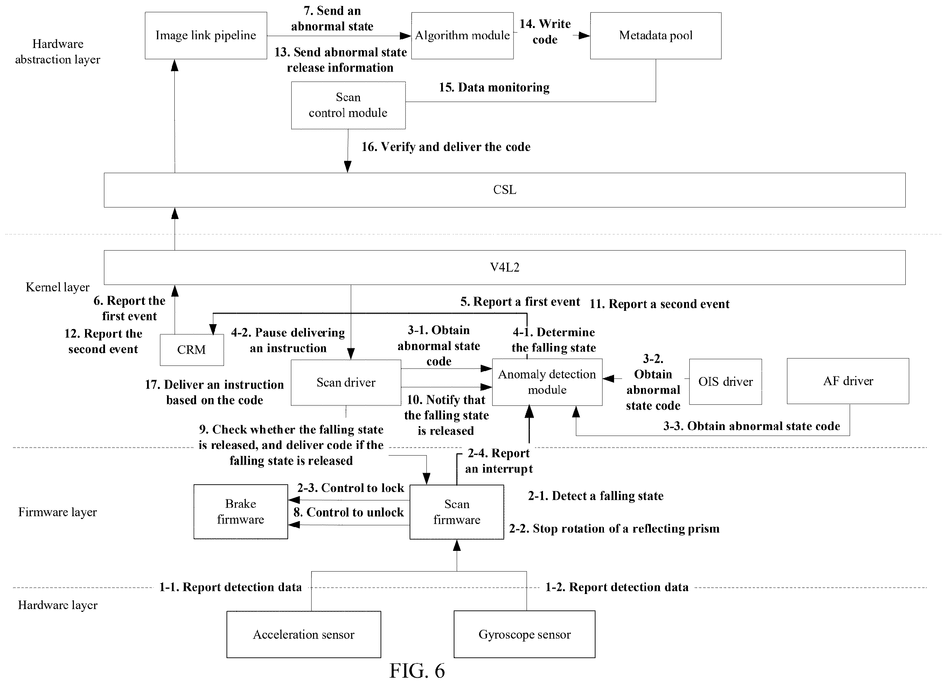

FIG. 6 shows an overall running time sequence of modules of an electronic device corresponding to automatic reset by a scan IC of an electronic device.

Automatic reset by the scan IC of the electronic device may be understood as follows: The electronic device autonomously detects whether the electronic device is in a non-falling state, and when determining that the electronic device is in the non-falling state, automatically unlocks a reflecting prism, and resumes rotation of the reflecting prism, and a user does not need to input an operation. Detailed descriptions are provided in the following with reference to FIG. 6.

As shown in FIG. 6, an acceleration sensor and a gyroscope sensor start running to obtain detection data. The acceleration sensor performs 1-1 to report detection data to firmware scan firmware of a scan IC, and the gyroscope sensor performs 1-2 to report detection data to the firmware scan firmware of the scan IC.

Based on the detection data of the acceleration sensor and the gyroscope sensor, the scan firmware performs 2-1 to detect that the electronic device is in a falling state, performs 2-2 to control a reflecting prism to stop rotating, performs 2-3 to lock the reflecting prism by using brake firmware, and performs 2-4 to report an interrupt signal to an anomaly detection module, to notify the anomaly detection module that the electronic device is abnormal.

After receiving the interrupt signal reported by the scan firmware, the anomaly detection module may call back, based on the interrupt signal, an anomaly dump interface of each drive module, to obtain abnormal state code of each drive module. For example, FIG. 3 shows that the anomaly detection model performs 3-1 to call back an anomaly dump interface registered by a scan driver to obtain scan abnormal state code; the anomaly detection model performs 3-2 to call back an anomaly dump interface registered by an OIS driver to obtain OIS abnormal state code; and the anomaly detection model performs 3-1 to call back an anomaly dump interface registered by an AF driver to obtain AF abnormal state code. In some embodiments, the anomaly detection module may alternatively call back, based on the interrupt signal, an anomaly dump interface of a scan driver, to obtain abnormal state code of the scan driver.

It should be noted that for a manner in which a plurality of drivers at a kernel layer, such as the scan driver, the OIS driver, and the AF driver, may register an anomaly dump interface and an anomaly reset interface with the anomaly detection module when a kernel driver is loaded, refer to content in the foregoing embodiment corresponding to FIG. 5, and details are not described herein again.

The anomaly detection module performs 4-1 based on abnormal state code of a driver module to determine that the electronic device is in the falling state, and performs 4-2 to notify the scan driver to pause delivery of all instructions, where the instruction generally refers to a control instruction delivered to the scan firmware and used to control a reflecting prism.

The anomaly detection module further performs 5 to report a first event to a CRM to indicate an abnormal state that the electronic device is in the falling state. The CRM performs 6 to report the first event to an image link pipeline through V4L2 and CSL.

The image link pipeline further performs 7 to send abnormal state information to an algorithm module, to notify the algorithm module that the electronic device is in the falling state. In some embodiments, after receiving the abnormal state information, the algorithm module may further stop calculation of a rotation policy of the reflecting prism based on the abnormal state information.

The acceleration sensor and the gyroscope sensor periodically report detection data to the scan firmware, and the scan firmware may continuously detect a status of the electronic device based on the detection data. If determining, based on the detection data, that the electronic device is not in the falling state, that is, the falling state is released, the scan firmware performs 8 to control, by using the brake firmware, to unlock the reflecting prism.

In some embodiments, the scan driver may start a timer, periodically poll the scan firmware by using a bus such as I2C, and perform 9 to check whether the falling state of the electronic device is released. If determining that the falling state of the electronic device is released, the scan driver may deliver code to the scan firmware.

As described above, in some embodiments, the target position, that is, code, of the reflecting prism obtained by the algorithm module may be written into the data pool metadata pool, so that another module monitors a change of data in the data pool. The scan control module performs data monitoring on the metadata pool. The scan control module detects that the code is written into the metadata pool, and after checking the code, delivers a control command to the scan driver. The control command carries the code. After receiving the control command, the scan driver may generate, based on the code, an instruction for controlling the reflecting prism to rotate, and deliver the instruction to the scan firmware.

If determining that the falling state of the electronic device is released, the scan driver may deliver the code to the scan firmware. It may be understood that if determining that the falling state of the electronic device is released, the scan driver generates, based on the code, an instruction for controlling the reflecting prism to rotate, and delivers the instruction to the scan firmware.

The scan driver may further perform 10 to notify the anomaly detection module that the falling state is released.

The anomaly detection module further performs 11 to report a second event to the CRM to indicate that the falling state of the electronic device is released. The CRM performs 12 to report the second event to the image link pipeline through V4L2 and CSL.

The image link pipeline further performs 13 to send abnormal state release information to the algorithm module, to notify the algorithm module that the electronic device is not in the falling state. In some embodiments, after receiving the abnormal state information, the algorithm module may further resume calculation of the target position of the reflecting prism based on the abnormal state release information.

The algorithm module obtains the target position, that is, code, of the reflecting prism through calculation, and performs 14 to write the code into the data pool metadata pool. The scan control module performs 15 to perform data monitoring on the metadata pool. The scan control module detects that the code is written into the metadata pool, and performs 16 to deliver a control command to the scan driver after checking the code. The control command carries the code. After receiving the control command, the scan driver may generate, based on the code, an instruction for controlling the reflecting prism to rotate, and deliver the instruction to the scan firmware.

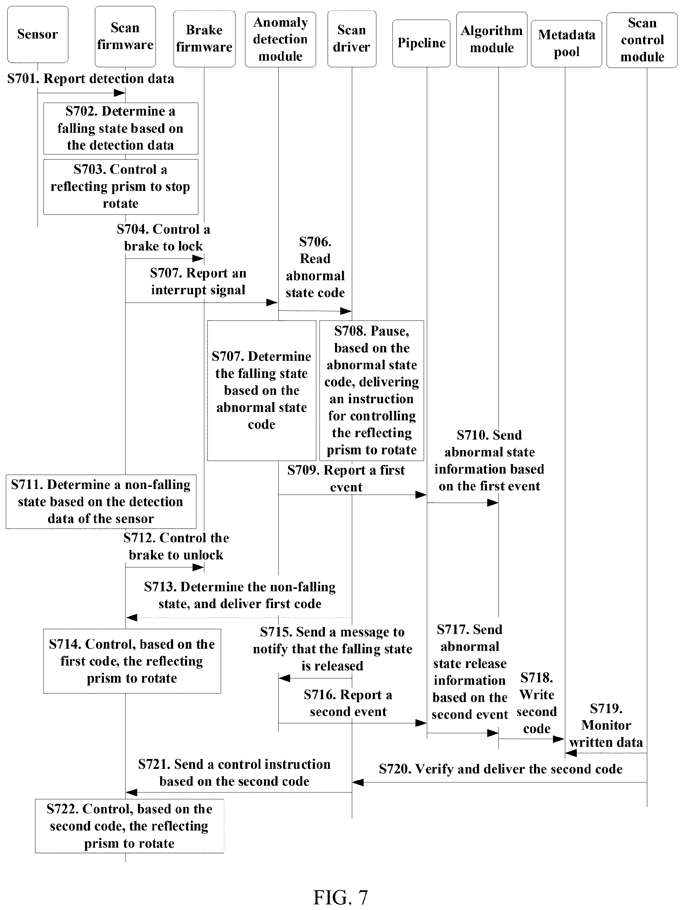

FIG. 7 is a diagram of signaling interaction of a fall detection solution according to another embodiment of this application.

As shown in FIG. 7, the fall detection method provided in this embodiment of this application includes the following steps.

S701. A sensor reports detection data to scan firmware.

S702. The scan firmware determines, based on the detection data, that the electronic device is in a falling state.

S703. The scan firmware controls a reflecting prism to stop rotating.

In this embodiment of this application, the scan firmware determines, based on the detection data, that the electronic device is in the falling state, and then controls the reflecting prism to stop rotating, thereby avoiding damage to the reflecting prism.

S704. The scan firmware controls, by using brake firmware, a brake to lock.

S707. The scan firmware reports an interrupt signal to an anomaly detection module.

S706. The anomaly detection module reads abnormal state code from a scan driver.

S707. The anomaly detection module determines, based on the abnormal state code, that the electronic device is in the falling state.

S708. The scan driver pauses, based on the abnormal state code, delivering an instruction for controlling the reflecting prism to rotate.

For content of step S701 to step S708, refer to content of step S501 to step S508 in the foregoing embodiments. Details are not described herein again.

S709. The anomaly detection module reports a first event to an image link pipeline.

In some embodiments, the anomaly detection module reports the first event to a CRM (camera request manager), and the first event indicates that the electronic device is in the falling state. The CRM receives the first event, and reports the first event to the image link pipeline through V4L2 and CSL buses.

In some embodiments, the anomaly detection module may report the event to the image link pipeline, or the first event may be reported to the image link pipeline by using another module.

S710. The image link pipeline sends abnormal state information to an algorithm module based on the first event.

The image link pipeline sends the abnormal state information to the algorithm module based on the first event, to notify the algorithm module that the electronic device is in the falling state, and the reflecting prism stops rotating.

In some embodiments, after receiving the abnormal state information, the algorithm module may further stop calculation of a target position of the reflecting prism based on the abnormal state information.

S711. The scan firmware determines, based on the detection data, that the electronic device is not in the falling state.

The sensor runs continuously or periodically to obtain the detection data. The detection data obtained by the sensor may be reported to the scan firmware. The scan firmware continuously determines a status of the electronic device based on the detection data reported by the sensor. When the electronic device releases the falling state, the scan firmware may determine, based on the detection data, that the electronic device is not in the falling state.

S712. The scan firmware controls, by using the brake firmware, the brake to unlock.

The scan firmware controls the brake firmware to unlock the reflecting prism.

S713. The scan driver determines that the electronic device is not in the falling state, and delivers first code to the scan firmware.

In some embodiments, the scan driver may start a timer, periodically poll the scan firmware by using a bus such as I2C, and check whether the falling state of the electronic device is released. If determining that the falling state of the electronic device is released, the scan driver may deliver the first code to the scan firmware.

The first code may be understood as code cached after the scan driver pauses delivering an instruction for controlling the reflecting prism to rotate.

If determining that the falling state of the electronic device is released, the scan driver may deliver the first code to the scan firmware. It may be understood that if determining that the falling state of the electronic device is released, the scan driver generates, based on the first code, an instruction for controlling the reflecting prism to rotate, and delivers the instruction to the scan firmware.

S714. The scan firmware controls, based on the first code, the reflecting prism to rotate.

The first code refers to the target position of the reflecting prism. Therefore, based on the first code, the scan firmware controls the reflecting prism to rotate.

S715. The scan driver sends a message to the anomaly detection module, to notify that the falling state is released.

If determining that the falling state of the electronic device is released, the scan driver may send the message to the anomaly detection module, to notify that the falling state is released.

Step S713 and step S715 are not limited to the execution sequence shown in FIG. 7, and may be performed in parallel, or step S713 is performed after step S715 is performed.

S716. The anomaly detection module reports a second event to the image link pipeline.

The anomaly detection module may report the second event to the image link pipeline after receiving the message indicating that the electronic device releases the falling state. The first event indicates that the electronic device is not in the falling state.

In some embodiments, the anomaly detection module reports the second event to the CRM (camera request manager). The CRM receives the second event, and reports the second event to the image link pipeline through V4L2 and CSL buses.

S717. The image link pipeline sends abnormal state release information to the algorithm module based on the second event.

The image link pipeline sends the abnormal state release information to the algorithm module based on the second event, to notify the algorithm module that the electronic device is not in the falling state.

S718. The algorithm module writes second code into the metadata pool.

After receiving the abnormal state release information, the algorithm module may resume calculating the target position, that is, code, of the reflecting prism. The algorithm module obtains the code through calculation, and writes the code into the metadata pool. To distinguish from the code mentioned in step S713, the code newly calculated by the algorithm module is referred to as the second code.

S719. The scan control module performs data monitoring on the metadata pool.

S720. The scan control module detects that the second code is written into the metadata pool, and after checking the second code, delivers a control command to the scan driver. The control command carries the second code.

In some embodiments, that the scan control module checks the second code before delivering the second code to the scan driver may be understood as: checking whether the target position of the reflecting prism indicated by the second code is a valid position. If the check succeeds, the second code is delivered to the scan driver.

In some embodiments, after obtaining the target position of the reflecting prism, the algorithm module may directly send the target position to the scan control module.

S721. The scan driver sends a control instruction to the scan firmware based on the second code.

The scan driver sends the control instruction to the scan firmware, where the control instruction carries the second code.

S722. The scan firmware controls, based on the second code, the reflecting prism to rotate.

The second code refers to the target position of the reflecting prism. Therefore, based on the second code, the scan firmware controls the reflecting prism to rotate.

Another embodiment of this application further provides a computer-readable storage medium. The computer-readable storage medium stores instructions. When the instructions are run on a computer or processor, the computer or processor is enabled to perform one or more steps in any one of the foregoing methods.

The computer-readable storage medium may be a non-temporary computer-readable storage medium. For example, the non-temporary computer-readable storage medium may be a ROM, a random access memory (RAM), a CD-ROM, a magnetic tape, a floppy disk, and an optical data storage device.

Another embodiment of this application further provides a computer program product including instructions. When the computer program product runs on a computer or processor, the computer or processor is enabled to perform one or more steps in any one of the foregoing methods.

## Claims

1. A fall protection method, applied to an electronic device, wherein the electronic device comprises a camera module, the camera module comprises a rotatable reflecting prism, and the fall protection method comprises:
receiving a first operation of a user, and in response to the first operation of the user, controlling the camera module to capture an image or perform focus tracking-based recording, wherein the reflecting prism is in a rotating state in a process in which the camera module captures the image or performs focus tracking-based recording;
detecting a running status of the electronic device when the reflecting prism is in the rotating state; and
when detecting that the electronic device is in a falling state, controlling the reflecting prism to stop rotating.

2. The fall protection method according to claim 1, after the controlling the reflecting prism to stop rotating, further comprising: locking a position of the reflecting prism.

3. The fall protection method according to claim 2, wherein the locking a position of the reflecting prism comprises:
locking the position of the reflecting prism by using a brake component, or locking the position of the reflecting prism by using a drive component of the reflecting prism.

4. The fall protection method according to any one of claims 1 to 3, wherein the electronic device comprises a first controller;
that the reflecting prism is in a rotating state in a process in which the camera module captures the image or performs focus tracking-based recording comprises: controlling, by the first controller, the reflecting prism to be in the rotating state in the process in which the camera module captures the image or performs focus tracking-based recording; and
the detecting a running status of the electronic device when the reflecting prism is in the rotating state; and when detecting that the electronic device is in a falling state, controlling the reflecting prism to stop rotating comprises:
detecting, by the first controller, the running status of the electronic device when the reflecting prism is in the rotating state; and when detecting that the electronic device is in the falling state, controlling the reflecting prism to stop rotating.

5. The fall protection method according to claim 4, wherein the electronic device further comprises an acceleration sensor and/or a gyroscope sensor, and the detecting, by the first controller, the running status of the electronic device when the reflecting prism is in the rotating state comprises:
detecting, by the first controller, the running status of the electronic device based on detection data of the acceleration sensor and/or the gyroscope sensor when the reflecting prism is in the rotating state.

6. The fall protection method according to claim 4, wherein the detecting, by the first controller, the running status of the electronic device when the reflecting prism is in the rotating state comprises:
detecting, by the first controller, the running status of the electronic device based on a message from an application processor of the electronic device when the reflecting prism is in the rotating state, wherein the message from the application processor is used to indicate whether the electronic device is in the falling state.

7. The fall protection method according to any one of claims 1 to 6, when detecting that the electronic device is in the falling state, further comprising:
obtaining abnormal state code information of a drive module of the reflecting prism;
determining, based on the abnormal state code information of the drive module of the reflecting prism, that the electronic device is in the falling state; and
stopping obtaining a target position of the reflecting prism.

8. The fall protection method according to claim 7, wherein the obtaining abnormal state code of a drive module of the reflecting prism comprises:
obtaining the abnormal state code information of the drive module of the reflecting prism by invoking an anomaly dump interface of the drive module of the reflecting prism.

9. The fall protection method according to any one of claims 1 to 8, after the controlling the reflecting prism to stop rotating, further comprising:
displaying a first interface, wherein the first interface comprises a first control;
receiving a second operation performed by the user on the first control; and
in response to the second operation, determining the target position of the reflecting prism, and controlling the reflecting prism to rotate to the target position.

10. The fall protection method according to any one of claims 1 to 8, after the controlling the reflecting prism to stop rotating, further comprising:
detecting, based on the detection data of the acceleration sensor and/or the gyroscope sensor, that the electronic device is in a non-falling state;
determining the target position of the reflecting prism; and
controlling the reflecting prism to rotate to the target position.

11. The fall protection method according to claim 9 or 10, before the controlling the reflecting prism to rotate to the target position, further comprising:
unlocking the position of the reflecting prism.

12. The fall protection method according to claim 9 or 10, before the determining the target position of the reflecting prism, further comprising:
resuming obtaining the target position of the reflecting prism.

13. An electronic device, comprising:
one or more processors, a memory, a camera module, and a display, wherein the camera module comprises a rotatable reflecting prism; and
the memory, the camera module, and the display are coupled to the one or more processors, the memory is configured to store computer program code, the computer program code comprises computer instructions, and when the one or more processors execute the computer instructions, the electronic device performs the fall protection method according to any one of claims 1 to 12.

14. A computer-readable storage medium, configured to store a computer program, wherein when being executed, the computer program is specifically used to implement the fall protection method according to any one of claims 1 to 12.

15. A computer program product, wherein when the computer program product runs on a computer, the computer is enabled to perform the fall protection method according to any one of claims 1 to 12.
